# EUROPÄISCHE PATENTSCHRIFT

(11) **EP 0 979 393 B1**
(45) Veröffentlichungstag und Bekanntmachung des Hinweises auf die Patenterteilung: **15.11.2000**
(21) Anmeldenummer: 99915536.9
(22) Anmeldetag: 25.02.1999
(51) Int. Cl.: G01G 13/16, G01G 19/393

(54) **Produktausgabevorrichtung mit bewegbaren Auffangbehältern**
Delivering a product with movable hoppers
Dépense d'un produit avec des récipients mouvants

(30) Priorität: 02.03.1998 DE 19808474
(43) Veröffentlichungstag der Anmeldung: 16.02.2000
(73) Patentinhaber: MULTIPOND WÄGETECHNIK GMBH, D-84470 Waldkraiburg (DE)
(72) Erfinder: SCHMIDHUBER, Josef, D-84559 Kraiburg (DE)
(74) Vertreter: Prüfer, Lutz H., Dipl.-Phys.
(86) Internationale Anmeldenummer: EP9901219
(87) Internationale Veröffentlichungsnummer: WO9945347

(56) Entgegenhaltungen:
- EP-A- 0 113 586
- EP-A- 0 725 263
- DE-A- 4 404 897
- GB-A- 2 131 963

## Beschreibung

Die vorliegende Erfindung bezieht sich auf eine Produktausgabevorrichtung für ein Produktbereitstellungssystem wie ein Wiegesystem nach dem Oberbegriff des Anspruchs 1.

Bei der Befüllung von leeren Verpackungen wie Beuteln, tiefgezogenen Bechern, Dosen oder ähnlichem zum Beispiel zur Herstellung von Fertigmahlzeiten o.ä. arbeiten moderne Verpakkungsmaschinen mit so hohen Geschwindigkeiten, daß es kaum noch möglich ist, die zu füllenden Verpackungsbehälter in der kurzen verfügbaren Zeit zuverlässig mit bestimmten Produktmengen, die zum Beispiel durch Wiegen, Zählen, zeitgesteuertes Dosieren, o.ä. erhalten worden sind, zu befüllen.

Um die Produktmengen, die in die Verpackungsbehälter zu füllen sind, bereit zu stellen, werden zum Beispiel eine entsprechende Anzahl herkömmlicher Abfüllwaagen oder eine Kombinationswaage verwendet. In beiden Fällen müssen in räumlich getrennten Wägebehältern der entsprechenden herkömmlichen Waagen oder der Kombinationswaage bereitliegende, abgewogene Produktmengen der Einfüllstelle der Verpackungsmaschine zugeführt werden. Das wird in der Regel mit Produktzuführvorrichtungen in der Form von Rutschen oder Sammeltrichtern geeigneter Neigung erreicht. Die aus den Wägebehältern abgegebene, gewogene Produktmenge wird nach einem Fall auf die Rutsche oder Sammeltrichterwand auseinandergezogen.

Die EP 0 113 586 B1 offenbart eine Produktausgabevorrichtung für ein Produktbereitstellungssystem, im dortigen Fall für ein Wiegesystem in Form einer Kombinationswaage, nach dem Oberbegriff des Anspruchs 1. Bei der dort offenbarten Produktausgabevorrichtung sind die beiden Auffangbehälter feststehend über der Einfüllöffnung der Produktempfangsvorrichtung der Verpackungsmaschine angeordnet. Die beiden Auffangbehälter weisen jeweils zwei Längswände auf, von denen jeweils eine relativ zu der anderen Längswand zum Öffnen des Auffangbehälters zum Entleeren einer gewogenen Produktmenge in die Einfüllöffnung der Verpackungsmaschine in Richtung der Mittelachse der Einfüllöffnung schwenkbar ist. Im geschlossenen Zustand eines Auffangbehälters begrenzen die Längswände einen sich nach unten verjüngenden Innenraum. Bei der Entleerung eines Auffangbehälters wird dessen schwenkbare Längswand nach innen über die Mittelachse der Einfüllöffnung geschwenkt. Die in dem Auffangbehälter bereitliegende, gewogene Produktmenge wird unter dem Einfluß der Gravitation beschleunigt. Beim Ausgeben erfährt die Produktmenge zusätzlich durch die nicht weggeschwenkte, schräge Längswand auch eine quer zu der Gravitationsbeschleunigung wirkende Beschleunigung. Daher wird die Produktmenge bereits beim Ausgeben aus dem Auffangbehälter auseinandergezogen.

Außerdem ist es durch den großen Öffnungsquerschnitt der Einfüllöffnung der Verpackungsmaschine notwendig, daß sich der Öffnungsquerschnitt der Produktempfangsvorrichtung der Verpackungsmaschine verjüngt, um einen Verpackungsbehälter mit einem kleineren Öffnungsquerschnitt zu befüllen. Dadurch wird ein weiterer Kontakt der gewogenen Produktmenge mit der Wand der Produktempfangsvorrichtung der Verpackungsmaschine und damit ein weiteres Auseinanderziehen der Produktmenge notwendig. Selbst wenn sich der Öffnungsquerschnitt der Produktempfangsvorrichtung der Verpackungsmaschine nicht verjüngt, so wird die von dem Auffangbehälter abgegebene Produktmenge aufgrund der erfahrenen Querbeschleunigung in Kontakt mit der Wand der Produktempfangsvorrichtung der Verpackungsmaschine kommen und ebenfalls auseinandergezogen.

Dieses Auseinanderziehen des Produktes bei der Ausgabe der gewogenen Produktmenge aus dem Auffangbehälter bzw. durch den Kontakt mit der Produktempfangsvorrichtung der Verpackungsmaschine begrenzt aber die mögliche Abfüllgeschwindigkeit der Verpackungsmaschine.

Aus der CH 428 543 ist eine Produktausgabevorrichtung für ein Produktbereitstellungssystem bekannt, die eine erste Produktzuführvorrichtung mit einem zugehörigen ersten Auffangbehälter und eine zweite Produktzuführvorrichtung mit einem zugehörigen zweiten Auffangbehälter, wobei die Auffangbehälter an ihrer Unterseite jeweils einen Verschluß aufweisen, aufweist und über das Produktbereitstellungssystem bereitgestellte Produktmengen an eine Produktempfangsvorrichtung ausgibt, wobei die Produktempfangsvorrichtung aus einer Mehrzahl von auf einer Kreisbahn unter den Produktzuführvorrichtungen umlaufenden Fülltrichtern besteht. Das Öffnen eines der Auffangbehälter erfolgt dann, wenn sich einer der umlaufenden Fülltrichter unter ihm befindet. Das Entleeren eines Fülltrichters erfolgt im weiteren Umlauf dann, wenn die Ausgangsöffnung des Fülltrichters, die einen Klappenverschluß aufweist, mit der Öffnung einer zu füllenden Packung zur Dekkung gelangt ist. Eine Produktempfangsvorrichtung, in die mehrere Produktzuführvorrichtungen entsprechende Produktmengen ausgeben, wird nicht offenbart.

Aus der DE 38 23 329 C2 ist ein Waagenbehälter mit einem Doppelklappenverschluß bekannt, der eine im wesentlichen längs seiner Längsachse spitz zulaufende Form aufweist.

Es ist Aufgabe der vorliegenden Erfindung, eine gattungsgemäße Produktausgabevorrichtung anzugeben, mit der ein solches Auseinanderziehen des Produktes vermieden werden kann.

Diese Aufgabe wird gelöst durch eine Produktausgabevorrichtung nach Anspruch 1.

Weiterbildungen der Erfindung sind in den Unteransprüchen angegeben.

Weitere Merkmale und Zweckmäßigkeiten ergeben sich aus der Beschreibung von Ausführungsbeispielen anhand der Figuren. Von den Figuren zeigen:
- Fig. 1: eine erste Ausführungsform der Erfindung mit einer Auffangbehälteranordnung in einer ersten Stellung, und
- Fig. 2: die Ausführungsform aus Fig. 1 mit der Auffangbehälteranordnung in einer zweiten Stellung.

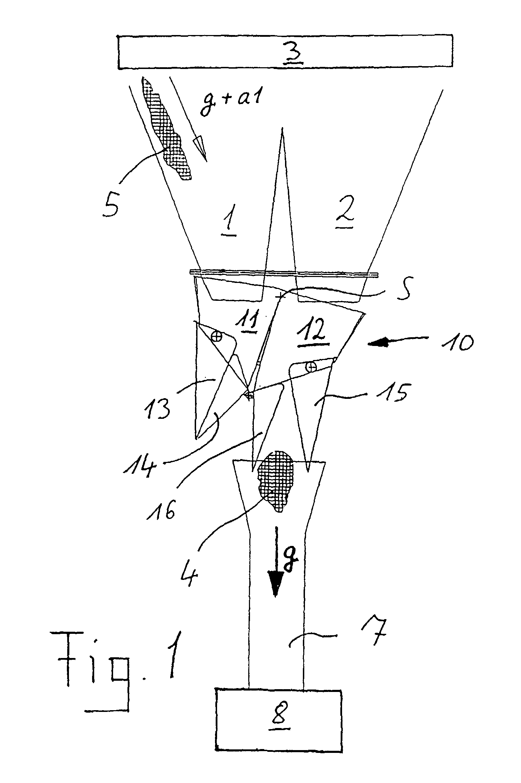

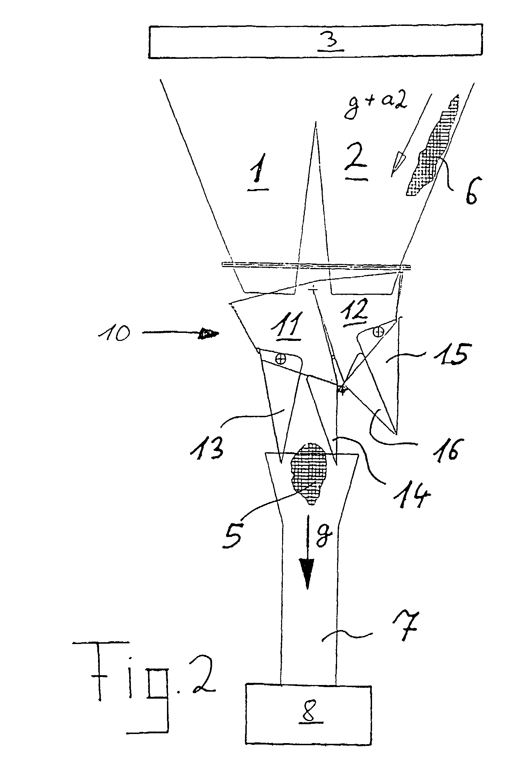

In den Fig. 1 und 2 ist eine erste Ausführungsform der Produktausgabevorrichtung gezeigt. In Fig. 1 und 2 sind ein Wiegesystem 3 als Beispiel eines Produktbereitstellungssystems, das z.B. als Kombinationswaage oder auch als Zählmaschine, Dosiermaschine, o.ä. ausgebildet sein kann, und eine Verpakkungsmaschine 8 als Blöcke dargestellt. Soweit in der folgenden Beschreibung die Begriffe oben, unten, horizontal, senkrecht, o.ä. verwendet werden, sind die entsprechenden Orientierungen in Betriebsstellung der Vorrichtung gemeint. Die Produktausgabevorrichtung der ersten Ausführungsform weist eine erste und eine zweite Produktzuführvorrichtung 1, 2 auf, die jeweils wenigstens in ihrem unteren Abschnitt als Sammeltrichter ausgebildet sind. Die Sammeltrichter 1, 2 weisen jeweils an ihrer Unterseite Auslaßöffnungen auf, die horizontal nebeinander mit einem Abstand voneinander angeordnet sind. Ein erster Auffangbehälter 11 ist unter der Auslaßöffnung des ersten Sammeltrichters 1 angeordnet und ein zweiter Auffangbehälter 12 ist unter der Auslaßöffnung des zweiten Sammeltrichters 2 angeordnet.

Die beiden Auffangbehälter 11, 12 weisen bei der gezeigten ersten Ausführungsform eine sich nach unten verjüngende Form des Innenraums auf. Jeder der Auffangbehälter 11, 12 weist in seinem unteren Teil einen Verschluß auf, der jeweils von zwei Verschlußklappen 13, 14 bzw. 15, 16 gebildet wird. Die Verschlußklappen 13, 14 bzw. 15, 16 begrenzen jeweils einen Innenraum, der eine sich nach unten verjüngende Form aufweist, die bei der ersten Ausführungsform genauer gesagt eine nach unten spitz zulaufende, annähernd rotationssymmetrische Form ist. Die beiden einen Verschluß bildenden Verschlußklappen 13, 14 bzw. 15, 16 sind jeweils durch eine Antriebsvorrichtung, die nicht gezeigt ist, um horizontale Schwenkachsen zum Öffnen und Schließen des Verschlusses relativ zueinander schwenkbar. Die Antriebsvorrichtung ist so ausgebildet, daß die Verschlußklappen mit hoher Beschleunigung bzw. Geschwindigkeit geschwenkt werden können. Im geöffneten Zustand des Verschlusses begrenzen die Verschlußklappen jeweils einen Öffnungsquerschnitt einer vorbestimmten runden Form mit einem ersten Durchmesser. Es sind bei anderen Ausführungsformen aber auch andere sich nach unten verjüngende Formen wie umgekehrte Pyramiden oder Kegel oder andere sich wenigstens in einer horizontalen Abmessung nach unten verjüngende Formen möglich.

Bei der in den Fig. 1 und 2 gezeigten ersten Ausführungsform bilden die Auffangbehälter 11, 12 eine Auffangbehälteranordnung 10, die um eine horizontale Schwenkachse S, die mittig zwischen den beiden Auffangbehältern und mittig zwischen den beiden Auslaßöffnungen angeordnet ist, durch eine nicht dargestellte Antriebsvorrichtung in eine erste und eine zweite Stellung schwenkbar ist. In der in Fig. 1 gezeigten ersten Stellung der Auffangbehälteranordnung 10 ist der zweite Auffangbehälter 12 in einer Ausgabestellung über einer Produktempfangsvorrichtung 7 der Verpackungsmaschine 8 positioniert. Die Produktempfangsvorrichtung 7 ist als ein senkrecht ausgerichtetes Einfüllrohr mit einem vorgegebenen runden Querschnitt mit einem zweiten Durchmesser ausgebildet. Bei der in Fig. 2 gezeigten zweiten Stellung der Auffangbehälteranordnung 10 ist der erste Auffangbehälter 11 in einer entsprechenden Ausgabestellung über dem Öffnungsquerschnitt der Produktempfangsvorrichtung 7 positioniert. In der Ausgabestellung sind der Verschluß des entsprechenden Auffangbehälters 11, 12 und der Öffnungsquerschnitt der Produktempfangsvorrichtung 7 im wesentlichen mittig zueinander ausgerichtet, d.h. der erste und der zweite Durchmesser sind in senkrechter Richtung (d.h. in Richtung der Gravitationsbeschleunigung g) im wesentlichen zentriert. Obwohl bei der ersten Ausführungsform die Auffangbehälter 11, 12 integraler Bestandteil einer Auffangbehälteranordnung 10 sind, können die Auffangbehälter ebenso als separate Auffangbehälter, die unabhängig voneinander aber koordiniert um jeweilige Schwenkachsen durch entsprechende Antriebsvorrichtungen in entsprechende Ausgabestellungen über der Produktempfangsvorrichtung 7 geschwenkt werden, ausgebildet sein.

Das Wiegesystem 3 gibt gewogene Produktmengen 4, 5, 6 in die erste oder die zweite Produktzuführvorrichtung 1, 2 aus. Die gewogenen Produktmengen 4, 5, 6, die von dem Wiegesystem ausgegeben werden, bestehen aus einer Menge von einzelnen Produktteilen wie Zuckerkristallkörnern, Bonbons, Tomaten o.ä. und rutschen, gleiten oder rollen entlang der Wand des entsprechenden Sammeltrichters 1, 2 unter der Wirkung durch die Gravitationsbeschleunigung g und einer zusätzlichen Querbeschleunigung al bzw. a2, die durch die Sammeltrichterwand verursacht wird, in den ersten bzw. zweiten Auffangbehälter 11, 12. Dabei wird die Produktmenge auseinandergezogen.

Die von dem Wiegesystem 3 abgegebenen, gewogenen Produktmengen 4, 5, 6 werden in den Auffangbehältern 11 bzw. 12 mit geschlossenem Verschluß so aufgefangen, daß die durch die Sammeltrichterwand auseinandergezogenen Produktmengen durch den sich verjüngenden Innenraum wieder in eine kompakte Form gesammelt werden. Die in einem Auffangbehälter 11, 12 aufzufangende Produktmenge 4, 5, 6 ist dabei so bemessen, daß sie in der kompakten Form nur in Kontakt mit den Verschlußklappen 13, 14, 15, 16 aber nicht mit den feststehenden Wänden der Auffangbehälter 11, 12 ist.

Die Auffangbehälter 11, 12 sind derart angeordnet, daß die Auslaßöffnung des entsprechenden Sammeltrichters 1, 2 in Richtung der Gravitationsbeschleunigung g immer innerhalb des Umfangs der oberen Öffnung des Auffangbehälters positioniert ist, so daß sie sowohl ihrer Ausgabestellung über der Produktempfangsvorrichtung 7 als auch in einer anderen Stellung eine gewogene Produktmenge 4, 5, 6, die von dem Wiegesystem 3 ausgegeben wird, empfangen können. Abhängig von der notwendigen Rate, mit der gewogene Produktmengen in die Verpackungsmaschine 8 abzugeben sind, kann daher z.B. bei der in Fig. 1 gezeigten Stellung des zweiten Auffangbehälters 12 von dem Wiegesystem 3 bereits eine weitere gewogene Produktmenge in den Sammeltrichter 2 abgegeben werden, die dann, abhängig von der Fall- bzw. Gleitgeschwindigkeit in dem Sammeltrichter 2 erst dann in dem Auffangbehälter 12 ankommt, wenn bei diesem durch Schwenken der Verschlußklappen 15, 16 der Verschluß bereits wieder geschlossen ist.

Es wird nun auf Fig. 1 Bezug genommen, in der gut zu erkennen ist, daß durch die im wesentlichen mittige Anordnung des Verschlusses des Auffangbehälters 12 über dem Öffnungsquerschnitt der Produktempfangsvorrichtung 7 ein Ausgeben bzw. Abwerfen der gewogenen Produktmenge 4 aus dem Auffangbehälter 12 ohne nachfolgenden Kontakt mit der Wand der Produktempfangsvorrichtung 7 möglich ist. Dieses wird im wesentlichen durch die mittige Anordnung des Verschlusses des Auffangbehälters 12 erreicht. Durch das schnelle Aufschwenken der Verschlußklappen 13, 14 bzw. 15, 16 jeweils weg von der Symmetrieachse erfährt die ausgegebene Produktmenge 4, 5 außer der Gravitationsbeschleunigung g im wesentlichen keine andere Beschleunigung. Durch das schnelle Wegschwenken der Verschlußklappen 13, 14 bzw. 15, 16 wird außerdem erreicht, daß kein Auseinanderziehen des Produktes durch ein Rutschen oder Gleiten entlang der Innenseiten der Verschlußklappen erfolgt. Das Vermeiden einer Querbeschleunigung der gewogenen Produktmenge 4 beim Ausgeben aus dem Auffangbehälter 12 führt dazu, daß der Querschnitt der kompakten Form, in der die gewogene Produktmenge 4 aus dem Auffangbehälter 12 abgeben wird, der jedenfalls kleiner oder gleich dem Öffnungsquerschnitt des geöffneten Verschlusses ist, und der Öffnungsquerschnitt der Produktempfangsvorrichtung 7 optimal aufeinander abgestimmt werden können. Bei der ersten Ausführungsform weist der entsprechende runde Öffnungsquerschnitt des geöffneten Verschlusses des Auffangbehälters den entsprechenden ersten Durchmesser auf, der geringfügig kleiner als der zweite Durchmesser des runden Öffnungsquerschnitts des Einfüllrohres 7 gewählt ist. Alternativ kann bei einem z. B. rechteckigen Öffnungsquerschnitt des Einfüllrohres 7 der Öffnungsquerschnitt des Verschlusses ebenfalls rechteckig gewählt sein.

Das Vermeiden des Auseinanderziehens der Produktmenge und des Ausübens einer Querbeschleunigung beim Ausgeben der Produktmenge aus dem Auffangbehälter wird grundsätzlich durch die sich verjüngende Form des Innenraumes, der durch die Verschlußklappen begrenzt wird, und das schnelle Aufschwenken der Verschlußklappen erreicht. Sollte eine sich verjüngende Form des Innenraums der Auffangbehälter bzw. des von dem Verschluß begrenztenInnenraums im Einzelfall nicht wünschenswert sein, so kann die gleiche Wirkung auch durch ein Öffnen der Verschlußklappe(n) derart erzielt werden, daß jeder Punkt der Verschlußklappe(n) in Richtung der Gravitationsbeschleunigung g mindestens bei Beginn des Öffnens eine Beschleunigung > g erfährt, in anderen Worten durch ein extrem schnelles Aufschwenken.

Wie sich aus der obigen Beschreibung der ersten Ausführungsform ergibt, wird die Notwendigkeit einer Verjüngung der Produkteinfüllvorrichtung 7, d.h. des Einfüllrohres der Verpakkungsmaschine 8 dadurch vermieden, daß die Auffangbehälter in eine entsprechende mittige Ausgabestellung über der Produktempfangsvorrichtung 7 bewegt werden. Außerdem wird ein Kontakt mit der Wand der Produktempfangsvorrichtung 7 dadurch vermieden, daß die abzugebende Produktmenge beim Ausgeben aus dem durch die Verschlußklappen begrenzten Innenraum außer der Gravitationsbeschleunigung im wesentlichen keine andere Beschleunigung erfährt, so daß der Öffnungsquerschnitt der Produktempfangsvorrichtung 7 und der Auslaßquerschnitt des Auffangbehälters optimal aufeinander abgestimmt werden können. Da die abzugebende Produktmenge zudem in der kompakten Form in der sie in dem durch die Verschlußklappen begrenzten Innenraum bereitgestellt worden ist, durch die Produktempfangsvorrichtung 7 in die Verpackungsmaschine 8 abgegeben wird, kann die Füllgeschwindigkeit der Verpackungsmaschine 8 weiter erhöht werden.

Bei einer weiteren Ausführungsform sind nicht nur zwei sondern drei oder mehr Produktzuführvorrichtungen und entsprechende Auffangbehälter vorgesehen. Die Auffangbehälter werden in einer entsprechenden Reihenfolge mittig über dem Öffnungsquerschnitt der Produktempfangsvorrichtung positioniert.

Der zeitliche Ablauf der Bewegung der Auffangbehälteranordnung 10 bzw. entsprechender separater Auffangbehälter und des Öffnens und Schließens der Auffangbehälter 11, 12 wird durch eine pneumatische oder elektromechanische Antriebsvorrichtung in Verbindung mit geeigneten mechanischen Elementen wie Hebeln, Gelenken, Kurvenscheiben, Anschlägen und ähnlichem gesteuert. Alternativ kann diese Steuerung auch durch mehrere pneumatische oder elektromechanische Antriebsvorrichtungen, deren Bewegungsabläufe von einer programmierbaren Steuerung koordiniert werden, erfolgen. Die Steuerung der Antriebsvorrichtung(en) ist in geeigneter Weise mit der Steuerung des Produktbereitstellungssystems 3 und der Verpackungsmaschine 8 synchronisiert.

Nach den Erfahrungen der Anmelderin sind mit einer erfindungsgemäßen Produktausgabevorrichtung gegenüber herkömmlichen Anordnungen Leistungssteigerungen der Füllgeschwindigkeit der Verpackungsmaschine und damit der Ausgaberate des Produktausgabesystems um bis zu 30% möglich.

## Patentansprüche

1. Produktausgabevorrichtung für ein Produktbereitstellungssystem, die
eine erste Produktzuführvorrichtung (1) mit einem zugehörigen ersten Auffangbehälter (11) und eine zweite Produktzuführvorrichtung (2) mit einem zweiten zugehörigen Auffangbehälter (12), wobei die Auffangbehälter (11, 12) an ihrer Unterseite jeweils einen Verschluß (13, 14; 15, 16) aufweisen, aufweist und über die das Produktbereitstellungssystem (3) bereitgestellte Produktmengen (4, 5, 6) an eine Produktempfangsvorrichtung (7), die einen vorgegebenen Öffnungsquerschnitt aufweist, ausgibt,
dadurch gekennzeichnet,
daß jeder Auffangbehälter (11, 12) zum Ausgeben einer bereitgestellten Produktmenge (4, 5) in eine Ausgabestellung bewegbar ist, in der sein Verschluß im wesentlichen mittig über dem Öffnungsquerschnitt angeordnet ist.

2. Produktausgabevorrichtung nach Anspruch 1, dadurch gekennzeichnet,
daß die Auffangbehälter (11, 12) Teil einer Auffangbehälteranordnung (10) sind, die derart bewegbar ist, daß jeweils einer der Auffangbehälter in seine Ausgabestellung bewegt ist.

3. Produktausgabevorrichtung nach Anspruch 1 oder 2, dadurch gekennzeichnet,
daß jede Produktzuführvorrichtung (1, 2) eine Auslaßöffnung aufweist, unterhalb derer der entsprechende Auffangbehälter (11, 12) derart angeordnet ist, daß dieser in jeder Stellung eine von dem Produktbereitstellungssystem (3) in die Produktzuführvorrichtung (1, 2) abgegebene Produktmenge (4, 5, 6) auffangen kann.

4. Produktausgabevorrichtung nach einem der Ansprüche 1 bis 3, dadurch gekennzeichnet,
daß der Verschluß jedes Auffangbehälters aus zwei relativ zueinander schwenkbaren Verschlußklappen (13, 14; 15, 16) besteht.

5. Produktausgabevorrichtung nach einem der Ansprüche 1 bis 4, dadurch gekennzeichnet,
daß jeder Auffangbehälter (11, 12) eine derartige Innenform aufweist, daß beim Öffnen des entsprechenden Verschlusses (13, 14; 15, 16) in der Ausgabestellung die bereitgestellte Produktmenge (4, 5, 6) außer der Gravitationsbeschleunigung (g) im wesentlichen keine quer zu der Gravitionsbeschleunigung (g) wirkende Beschleunigung erfährt.

6. Produktausgabevorrichtung nach einem der Ansprüche 1 bis 5, dadurch gekennzeichnet,
daß der Innenraum jedes Auffangbehälters (11, 12) wenigstens in dem Abschnitt, der von dem Verschluß (13, 14; 15, 16) begrenzt wird, im geschlossenen Zustand des Verschlusses (13, 14; 15, 16) jeweils eine sich in Richtung der Gravitationsbeschleunigung (g) im wesentlichen verjüngende Form aufweist.

7. Produktausgabevorrichtung nach einem der Ansprüche 1 bis 6, dadurch gekennzeichnet,
daß der Innenraum jedes Auffangbehälters (11, 12) wenigstens in dem Abschnitt, der von dem Verschluß (13, 14; 15, 16) begrenzt wird, im geschlossenen Zustand des Verschlusses (13, 14; 15, 16) jeweils eine im wesentlichen längs einer Längsachse spitz zulaufende Form aufweist.

8. Produktausgabevorrichtung nach einem der Ansprüche 1 bis 7, dadurch gekennzeichnet,
daß der Verschluß jedes Auffangbehälters (11, 12) im geöffneten Zustand jeweils einen Öffnungsquerschnitt aufweist, der kleiner als der Öffnungsquerschnitt der Produktempfangsvorrichtung (7) ist.

9. Produktausgabevorrichtung nach einem der Ansprüche 1 bis 8, dadurch gekennzeichnet,
daß das Produktbereitstellungssystem ein Wiegesystem (3) ist.

## Claims

1. A product discharge device for a product providing system, comprising
a first product feed device (1) having an associated first collecting container (11) and a second product feed device (2) having a second associated collecting container (12), the collecting containers comprising shutters (13, 14; 15, 16) at their respective lower sides, through which the product providing system (3) discharges provided product quantities (4, 5, 6) to a product receiving device (7), comprising a predetermined opening cross-section,
characterized in that
each collecting container (11, 12) is movable into a discharge position for discharging a provided product quantity (4, 5), in the discharge position the shutter being arranged substantially in the center above the opening cross-section.

2. The product discharge device according to claim 1, characterized in that
the collecting containers (11, 12) is part of a collecting container arrangement (10) being movable such that one of the collecting containers is movable into its discharge position.

3. Product discharge device according to claim 1 or 2, characterized in that
each product feed device (1, 2) comprises a discharge opening under which the corresponding collecting container (11, 12) is located such that in each position it can receive a product quantity (4, 5, 6) provided from the product providing system (3) into the product feed device (1, 2).

4. Product discharge device according to one of claims 1 to 3, characterized in that the shutter of each collecting container consists of two shutter flaps (13, 14; 15, 16) being pivotable to each other.

5. Product discharge device according to one of claims 1 to 4, characterized in that
each collecting container (11, 12) comprises such an inner shape that during opening the corresponding shutter (13, 14; 15, 16) in the discharge position the provided product quantity (4, 5, 6) essentially undergoes no acceleration acting laterally to the gravitational acceleration (g), apart from the gravitational acceleration (g).

6. Product discharge device according to one of claims 1 to 5, characterized in that
the inner space of each collecting container (11, 12) comprises in the closed condition of the shutter (13, 14; 15, 16) a shape tapered essentially in the direction of the gravitational acceleration (g) in the portion limited by the shutter (13, 14; 15, 16).

7. Product discharge device according to one of claims 1 to 6, characterized in that
the inner space of each collecting container (11, 12) comprises in the closed condition of the shutter (13, 14; 15, 16) a shape tapering essentially along a longitudinal access to a point, at least in that portion which is limited by the shutter (13, 14; 15, 16).

8. Product discharge device according to one of claims 1 to 7, characterized in that
the shutter of each collecting container (11, 12) comprises an opening cross-section in the open condition which is smaller than the opening cross-section of the product receiving device (7).

9. Product discharge device according to one of claims 1 to 8, characterized in that
the product providing system is a weighing system (3).

## Revendications

1. Dispositif de distribution de produit pour un système d'approvisionnement en produit, qui comporte un premier dispositif d'alimentation en produit (1) avec un premier récipient collecteur (11) spécifique et un deuxième dispositif d'alimentation en produit (2) avec un deuxième récipient collecteur (12) spécifique, les récipients collecteurs (11, 12) présentant chacun un dispositif de fermeture (13, 14 ; 15, 16) sur leur face inférieure et par lesquels le système d'approvisionnement en produit (3) délivre des quantités de produit préparées (4, 5, 6) à un dispositif récepteur de produit (7), qui présente une section d'ouverture prédéfinie, caractérisé en ce que chaque récipient collecteur (11, 12) peut être déplacé pour la délivrance d'une quantité de produit préparée (4, 5) dans une position de sortie, dans laquelle son dispositif de fermeture est sensiblement centré au-dessus de la section d'ouverture.

2. Dispositif de distribution de produit selon la revendication 1, caractérisé en ce que les récipients collecteurs (11, 12) font partie d'un agencement de récipients collecteurs (10), qui peuvent être déplacés de façon que, à chaque fois, l'un des récipients collecteurs soit respectivement déplacé dans sa position de sortie.

3. Dispositif de distribution de produit selon la revendication 1 ou 2, caractérisé en ce que chaque dispositif d'alimentation en produit (1, 2) présente une ouverture d'évacuation, au-dessous de laquelle le récipient collecteur correspondant (11, 12) est disposé de façon que celui-ci puisse recevoir dans chaque position une quantité de produit (4, 5, 6) qui est délivrée par le système d'approvisionnement en produit (3) dans le système d'alimentation en produit (1, 2).

4. Dispositif de distribution de produit selon l'une quelconque des revendications de 1 à 3, caractérisé en ce que la fermeture de chaque récipient collecteur comprend deux clapets de fermeture (13, 14 ; 15, 16) qui peuvent être basculés l'un par rapport à l'autre.

5. Dispositif de distribution de produit selon l'une quelconque des revendications de 1 à 4, caractérisé en ce que chaque récipient collecteur (11, 12) présente une forme intérieure telle que, lors de l'ouverture du dispositif de fermeture correspondant (13, 14 ; 15, 16) et dans la position de sortie, la quantité de produit (4, 5, 6) mise à disposition ne subit sensiblement pas d'accélération transversale à l'accélération de gravitation (g) en dehors de l'accélération de gravitation (g).

6. Dispositif de distribution de produit selon l'une quelconque des revendications de 1 à 5, caractérisé en ce que l'espace intérieur de chaque récipient collecteur (11, 12) présente, au moins dans la partie qui est délimitée par le dispositif de fermeture (13, 14 ; 15, 16), une forme sensiblement effilée dans le sens de l'accélération de gravitation (g), lorsque le dispositif de fermeture (13, 14 ; 15, 16) est obturé.

7. Dispositif de distribution de produit selon l'une quelconque des revendications de 1 à 6, caractérisé en ce que l'espace intérieur de chaque récipient collecteur (11, 12) présente une forme effilée sensiblement le long d'un axe longitudinal dans la partie qui est délimitée par le dispositif de fermeture (13, 14 ; 15, 16), lorsque celui-ci est obturé.

8. Dispositif de distribution de produit selon l'une quelconque des revendications de 1 à 7, caractérisé en ce que le dispositif de fermeture de chaque récipient collecteur (11, 12) présente à l'état fermé une section d'ouverture qui est inférieure à la section d'ouverture du dispositif récepteur de produit (7).

9. Dispositif de distribution du produit selon l'une quelconque des revendications 1 à 8, caractérisé en ce que le système d'approvisionnement en produit est un système de pesée (3).
